# FASCICULE DE BREVET EUROPEEN

(11) **EP 1 007 424 B1**
(45) Date de publication et mention de la délivrance du brevet: **28.05.2003**
(21) Numéro de dépôt: 97936738.0
(22) Date de dépôt: 05.08.1997
(51) Int. Cl.: B65D 47/12, B29C 45/00, B29C 45/16

(54) **CAPSULE DE DISTRIBUTION EQUIPEE D'UN BOUCHON, ET PROCEDE DE FABRICATION DE CETTE CAPSULE**
ENTNAHMEVERSCHLUSS MIT STOPFEN SOWIE VERFAHREN ZU DESSEN HERSTELLUNG
DISPENSING CLOSURE WITH STOPPER, AND METHOD FOR MANUFACTURING SAME

(30) Priorité: 22.08.1996 FR 9610375
(43) Date de publication de la demande: 14.06.2000
(73) Titulaire: L'OREAL, 75008 Paris (FR)
(72) Inventeur: REVENU, Christian, F-93190 Livry Gargan (FR)
(74) Mandataire: Boulard, Denis
(86) Numéro de dépôt international: FR9701451
(87) Numéro de publication internationale: WO98007632

(56) Documents cités:
- WO-A-91/01213
- CH-A- 659 990
- DE-A- 1 941 479
- DE-A- 3 039 796
- DE-A- 3 114 827
- FR-A- 2 184 961

## Description

La présente invention se rapporte à une capsule de distribution injectée comportant un embout de distribution équipé d'un bouchon amovible. Cette capsule est destinée à équiper un récipient contenant un produit liquide. L'invention se rapporte aussi à un procédé de fabrication simultanée de la capsule et du bouchon, par bi-injection de deux matériaux différents. Plus particulièrement, ce procédé permet d'obtenir, dans un seul moule, la capsule comportant le bouchon mis en place sur l'embout.

La capsule de l'invention est destinée, notamment, à équiper un récipient tel qu'un flacon à col, à parois plus ou moins compressibles contenant, par exemple, un shampooing, une crème de soin, un fond de teint liquide, une lotion capillaire, ou notamment tout autre produit cosmétique, pharmaceutique ou parapharmaceutique. Ces produits sont vendus sur le marché en grande quantité ; aussi, le prix de leur emballage doit être aussi faible que possible.

Actuellement, les flacons munis d'une capsule de ce genre sont obtenus, généralement, en fixant, après remplissage du liquide à distribuer, la capsule sur le col du récipient, par exemple par claquage ou vissage. Lors d'une étape supplémentaire, le bouchon est mis en place sur l'embout de la capsule pour empêcher l'écoulement du liquide pendant le stockage ou le transport.

Un premier objectif de la présente invention est d'équiper un flacon de produit d'une capsule de distribution, dont le prix de fabrication et de montage est très avantageux. Notamment, l'invention vise à réduire les prix de fabrication et de conditionnement d'un flacon équipé d'une capsule de distribution à bouchon. Aussi, l'invention propose une capsule équipée d'un bouchon qui peut être obtenue par moulage en une seule opération par la technique de la bi-injection de deux matériaux différents dans un moule approprié. L'invention présente, notamment, l'avantage que le bouchon peut être surmoulé sur l'embout de la capsule par un procédé de moulage simple, évitant ainsi une opération supplémentaire de mise en place du bouchon sur l'embout.

On connaît, par le document WO 91/01 213, un procédé de fabrication d'un tube, ce tube comportant un col sur lequel est disposé un bouchon de fermeture de forme sensiblement cylindrique. Ce procédé consiste à former, dans un moule en quatre parties, d'abord le bouchon par injection d'un premier matériau, puis par un déplacement hélicoïdal d'une première partie annulaire du moule, créer un volume destiné à former le col du tube, puis par déplacement d'une autre partie du moule, de forme annulaire et entourant ladite première partie, créer un volume complémentaire destiné à recevoir le corps du tube. Dans les volumes ainsi crées, on injecte ensuite un second matériau approprié pour former le corps et le col du tube. On démoule ensuite le tube muni du bouchon. Ce procédé présente l'inconvénient de nécessiter un moule relativement compliqué en quatre parties, dont une partie doit être déplacée axialement et une autre partie doit être déplacée simultanément en translation et en rotation, par rapport aux deux parties fixes, pour créer le volume recevant le col et le corps du tube. En outre, ce procédé de moulage est limité à la réalisation de pièces essentiellement cylindriques droites.

La présente Invention permet d'utiliser un moule simple, ne nécessitant, pour l'injection de la capsule de l'invention, qu'un déplacement axial d'une seule partie du moule, grâce à une forme sensiblement tronconique du bouchon.

Aussi, la présente invention se rapporte à une capsule de distribution thermoformée apte à équiper un récipient rempli d'un produit liquide, comportant : un embout de distribution allongé, ledit embout présentant une extrémité libre percée en son centre d'un orifice pour la distribution du produit liquide; un bouchon pour la fermeture amovible de l'orifice, l'embout étant formé d'un premier matériau thermoplastique et le bouchon étant formé d'un second matériau thermoplastique, les premier et second matériaux étant incompatibles entre eux, le bouchon comportant une portion cylindrique. Une telle capsule est décrite dans DE-A-1 941 479. Selon l'invention, la portion cylindrique du bouchon est surmontée d'une portion sensiblement tronconique, ladite portion tronconique présentant une surface extérieure, ladite surface extérieure étant la réplique à l'identique de la surface extérieure d'une portion tronconique formée par ladite extrémité libre de l'embout.

Le terme "réplique identique" s'entend du fait que la courbe (ou profil) formée par la surface extérieure de la partie tronconique du bouchon résulte d'une translation point à point de la courbe formée par la surface extérieure de la partie tronconique de l'embout.

Selon une forme de réalisation particulière de l'invention, la portion cylindrique du bouchon est séparée de la portion tronconique par un épaulement, ledit épaulement étant d'une largeur radiale telle que, lorsque le bouchon est disposé sur l'embout, la surface extérieure de ladite portion cylindrique du bouchon soit sensiblement en alignement avec la surface extérieure de l'embout.

Avantageusement, l'embout est traversé par un canal de distribution du produit. Ainsi, la forme tronconique de l'embout permet une application précise du produit à l'endroit souhaité. Avantageusement, la forme du cône est cholsie de sorte qu'un angle compris entre 5° et 45° est formé entre la directrice et la génératrice dudit cône.

Cette capsule peut comporter, en outre, des premiers moyens de fixation portés par la portion sensiblement tronconique de l'embout et des seconds moyens de fixation portés par la surface intérieure du bouchon, les premiers moyens étant complémentaires aux seconds. Ces moyens permettent d'assurer une fixation étanche du bouchon sur ledit embout lors du rebouchage de la capsule.

Avantageusement, les premiers moyens de fixation prévus pour la fixation du bouchon sur l'embout, sont constitués par un bourrelet annulaire situé sur l'embout, les seconds moyens de fixation étant alors constitués par une gorge annulaire située sur la surface intérieure du bouchon. Dans ce cas, le bouchon présente, sur sa surface tronconique externe un bourrelet, également, de même forme que le bourrelet de l'embout.

Avantageusement, l'orifice de distribution est situé au fond d'un renfoncement ménagé au centre de ladite extrémité libre, le bouchon comportant un picot dont la forme est telle que, en position fermée du bouchon sur l'embout, le picot remplisse sensiblement tout le renfoncement, obturant ainsi, de manière étanche, ledit orifice.

La capsule peut comporter, en outre, des moyens de raccordement au réservoir. Lorsqu'on utilise, par exemple, un flacon à col fileté, ces moyens sont constitués par une bague de vissage à filetage complémentaire au filetage du col, cette bague étant prévue sur une extrémité de la capsule opposée à l'embout.

Au sens de la présente invention, par le terme "matériaux incompatibles", on entend deux matériaux qui ne peuvent pas former de liaison mécanique entre eux, par thermofusion. Ceci peut être obtenu par un choix judicieux desdits matériaux.

Il est bien entendu que, selon la nature desdits matériaux choisis, un certain collage du bouchon sur l'embout peut se produire, ce collage pouvant être rompu par l'utilisateur en appliquant un léger couple de torsion du bouchon par rapport à l'embout. Ainsi, il est avantageux de choisir les premier et second matériaux de sorte que la température de fusion du premier matériau soit supérieure à la température de fusion du second matériau, par exemple supérieure d'environ 20°C à 70°C.

Généralement, le premier matériau est un matériau relativement rigide choisi parmi les polypropylènes ou les polyéthylènes haute densité, tandis que le second matériau est un matériau semi-rigide à souple, choisi parmi les polyéthylènes basse densité et les élastomères.

A titre d'exemple non limitatif, on citera comme premier et second matériaux utilisables selon l'invention : les polypropylènes (température de fusion environ 170°C) et les polyéthylènes (température de fusion environ 120°C), ou les polypropylènes et les élastomères de polyuréthane.

Un second objet de l'invention est constitué par un procédé de fabrication d'une capsule de distribution telle que décrite précédemment. La capsule est pourvue d'un axe longitudinal et comporte un embout de distribution fermé par un bouchon.

Ce procédé consiste à exécuter successivement les étapes suivantes :
a) injecter un premier matériau thermoplastique ayant une température de fusion, dans un premier espace délimité par un moule comprenant une première partie centrale, une seconde partie centrale, mobile axialement, et une partie latérale entourant lesdites première et seconde parties centrales, de manière à former l'embout, ladite seconde partie centrale ayant une surface sensiblement tronconique, en regard de la première partie centrale ;
b) écarter axialement la seconde partie centrale par rapport à la première, de manière à délimiter un second espace pour le moulage du bouchon ;
c) injecter dans le second espace un second matériau thermoplastique non compatible avec le premier matériau, de manière à former ledit bouchon, ledit second matériau étant injecté à une température inférieure à la température de fusion du premier matériau ; et
d) démouler la capsule après refroidissement.

Avantageusement, le second matériau présente une température de fusion inférieure d'au moins 20°C à la température de fusion du premier matériau. Selon un aspect intéressant de l'invention, notamment, la température d'injection du second matériau est d'au moins 20° inférieure à la température de fusion du premier matériau.

Le bouchon, réalisé de cette manière, présente à sa base une partie cylindrique dont la hauteur correspond à la translation de la partie externe du moule. En outre, la surface interne du bouchon est strictement complémentaire à la surface externe de l'embout.

Selon ce procédé, avantageusement, la première température d'injection est au moins égale à la seconde température d'injection. En particulier, lorsqu'on injecte la capsule en polypropylène et le bouchon en polyéthylène, les températures d'injection sont, par exemple, de 190°C et 220°C respectivement. Généralement, la température d'injection de ces matériaux est supérieure à la température de fusion respective.

Enfin, un troisième objet de l'invention se rapporte à un récipient contenant un liquide à distribuer et équipé d'une capsule de distribution telle que définie ci-dessus et réalisée par le procédé ci-dessus. Ce récipient peut se présenter sous forme de flacon en plastique rigide ou souple, ou bien en verre, de section cylindrique ou ovale, sous forme de tube ou de flacon-tube. Généralement, tout type de récipient utilisable dans les domaines cosmétique, pharmaceutique ou parapharmaceutique peut être équipé de la capsule de l'invention.

On décrira maintenant, à titre d'exemple purement illustratif et nullement limitatif, un mode de réalisation particulier de la capsule de l'invention et son procédé de fabrication, en référence aux dessins annexés.

La figure 1 représente une vue en coupe axiale d'un distributeur comprenant un flacon et une capsule conforme à l'invention, cette capsule étant équipée d'un bouchon.

La figure 2 représente une coupe axiale agrandie de la capsule et du bouchon de la figure 1.

La figure 3 représente une vue schématique en coupe axiale partielle d'un moule pour la capsule de la figure 2, la capsule étant en cours de fabrication dans le moule.

La figure 4 représente une vue schématique du moule de la figure 3, en coupe axiale partielle, ce moule contenant la capsule de la figure 2, le bouchon étant en cours de fabrication.

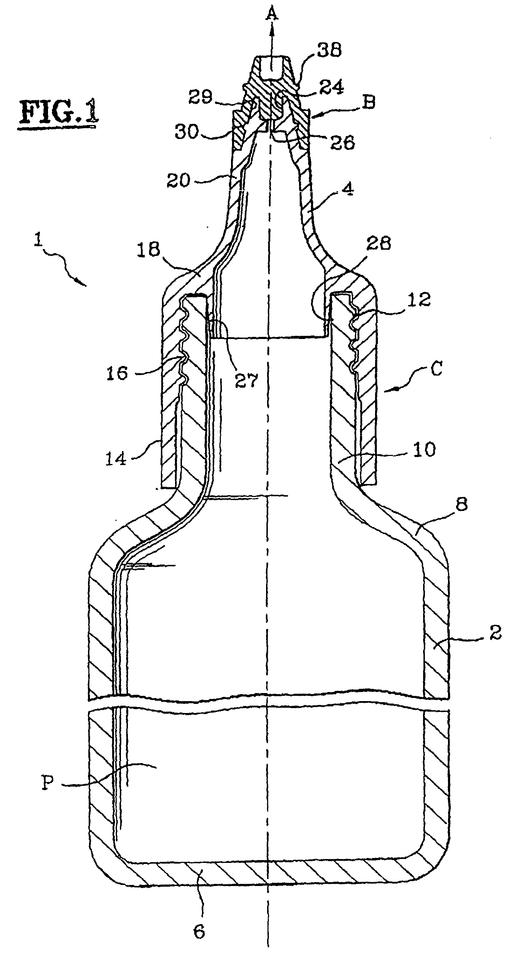

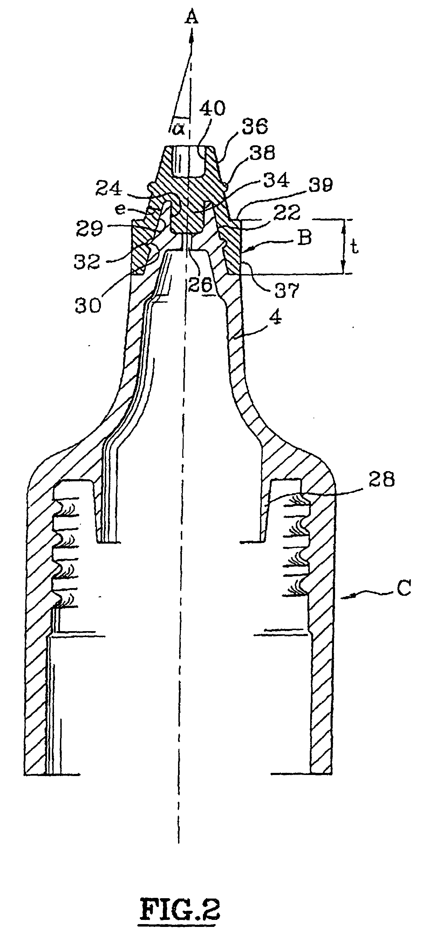

Par référence aux figures 1 et 2, on voit représenté un distributeur 1 présentant un axe longitudinal A, constitué d'un récipient 2 en forme de flacon, rempli d'un produit liquide P et surmonté d'une capsule de distribution C, conforme à l'invention. La capsule C comporte un embout de distribution 4 traversé par un canal central de distribution, lui-même obturé par un bouchon B.

Le flacon 2 présente une forme cylindrique et comporte un fond 6 fermé. Du côté opposé au fond, le flacon 2 présente un épaulement 8. A cet épaulement 8 se raccorde un col cylindrique 10 pourvu d'un filetage externe 12.

Sur le col 10 est fixée, par vissage, la capsule C. Elle comporte une bague de vissage 14 entourant le col 10 et muni d'un taraudage interne 16 coopérant avec le filetage 12 du col. L'extrémité opposée au flacon 2 de cette bague 14 comporte un épaulement 18 qui se prolonge dans la direction opposée au flacon sous forme de tubulure 20 dont le diamètre diminue vers son extrémité libre 22. Cette tubulure 20 constitue un embout d'application du produit P. L'extrémité libre 22 de l'embout 20 est conformé extérieurement en tronc de cône, pourvu d'un alésage central 24. Au fond de l'alésage central 24 est pratiqué un orifice de distribution 26, en communication avec le produit P. Pour assurer une bonne étanchéité de la capsule sur le flacon 2, cette dernière comporte une jupe d'étanchéité circulaire 27 s'appliquant contre le bord intérieur 28 du col 10.

Sur l'extrémité conique de l'embout 20 s'applique le bouchon B. Le bouchon B est pourvu d'une surface externe et d'une surface interne. Comme visible sur la figure 2, la surface interne 29 du bouchon B est tronconique, épousant la forme externe du tronc de cône 22. Le cône 22 est pourvu d'un bourrelet de fixation 30 situé environ à mi-hauteur du cône, le bourrelet coopérant avec une gorge annulaire complémentaire 32 pratiquée dans la surface interne 29 du bouchon. Ce système à bourrelet / gorge constitue un moyen de fixation du bouchon B sur la capsule C. Comme visible sur les figures 1 et 2, au sommet du tronc de cône 22 de l'embout est pourvu un picot de bouchage 34 rentrant à étanchéité dans l'alésage 24 de la capsule.

Selon l'invention, la surface externe 36 du bouchon B présente strictement la même forme que la surface externe du tronc de cône 22 de l'embout 20, c'est-à-dire, on y trouve un tronc de cône 36, un bourrelet externe 38 et un alésage 40.

Le bourrelet 38 peut servir d'élément de préhension, facilitant l'enlèvement du bouchon de l'embout, notamment lors de la première utilisation.

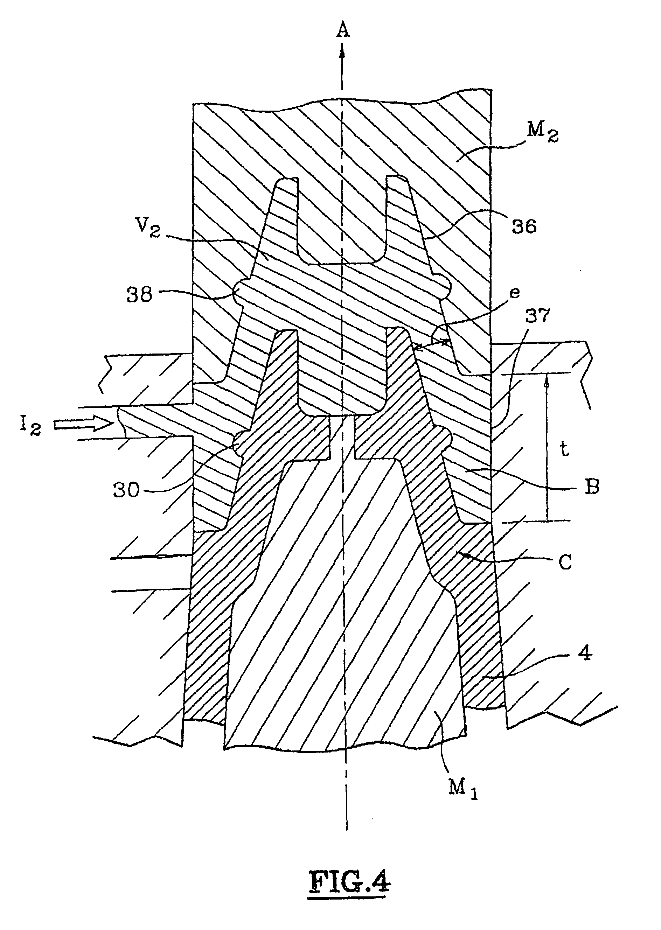

Conformément à l'invention, la base du bouchon B est constituée d'une partie cylindrique 37 de hauteur t (comme indiqué sur les figures 2 et 4). Un épaulement annulaire 37 sépare la partie cylindrique 37 de la partie tronconique 36.

Il est à noter que la surface externe de l'embout 20 et respectivement la surface externe 36 du bouchon, forment un angle α avec l'axe A. L'angle α est compris, avantageusement, entre environ 5° et 45°. La valeur de cet angle est choisie en fonction des matériaux employés et de la qualité de bouchage souhaitée.

Avantageusement, la capsule C est formée, par un premier matériau thermoplastique relativement rigide, par exemple du polypropylène. Le bouchon est formé, de préférence, par un matériau thermoplastique semi-rigide, par exemple du polyéthylène basse densité (PEBD) ou un matériau thermoplastique élastomérique. En raison de sa structure en matériau semi-rigide ou élastomérique, le bouchon s'applique, de façon étanche sur l'embout 4. Notamment, lors de la remise en place du bouchon B, par l'utilisateur, sur l'embout 4, l'engagement du bourrelet 30 dans la gorge 32 permet un rebouchage étanche de la capsule.

Il est bien entendu, que le système bourrelet/gorge peut ne pas être réalisé, lorsqu'on réalise une capsule pour un produit mono-dose, où un rebouchage n'est pas souhaité. Dans ce cas, le bouchon tient en place sur l'embout par une adhésion qui se produit dès la fabrication de l'embout avec le bouchon par bi-injection de deux matériaux appropriés, cette adhésion étant suffisante pour assurer l'étanchéité de la capsule pendant le transport.

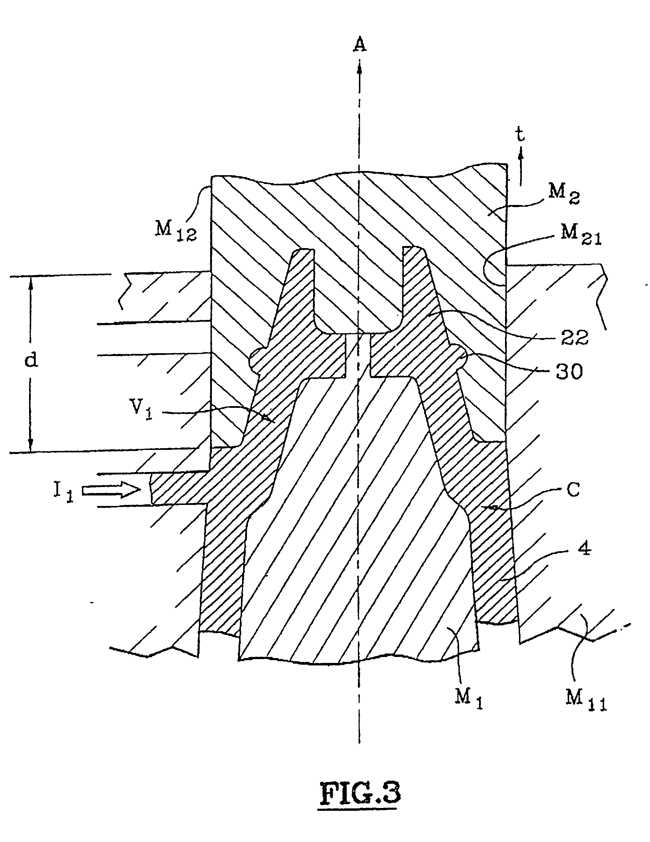

La capsule C de l'invention munie de son bouchon B peut être obtenue par injection de deux matériaux thermoplastiques différents, dans un seul moule approprié. On voit sur la figure 3 une coupe schématique partielle d'un moule ouvrant en trois parties *M*_{*1*} et *M*_{*2*} et *M*_{*11*}*,* montrant l'embout 4 de la capsule en cours de réalisation. Les deux parties centrales du moule *M*_{*1*} et *M*_{*2*} définissent avec une partie périphérique latérale *M*_{*11*} un volume *V*_{*1*} correspondant à la forme de la capsule. Il est à noter, que la partie *M*_{*2*} du moule présente un contour externe cylindrique *M*_{*12*}*,* s'emboîtant axialement, selon une distance d déterminée, dans une portion cylindrique creuse *M*_{*21*} correspondante de la partie *M*_{*11*} du moule. Pour la réalisation de la capsule, on injecte, au travers d'un canal d'injection *I*_{*1*}, dans le volume *V*_{*1*} un premier matériau thermoplastique, ici du polypropylène, à une température *T*_{*1*} déterminée, par exemple 220°C.
Après la réalisation de la capsule C, on écarte, selon l'axe A, la partie *M*_{*2*} et les deux autres parties *M*_{*1*} et *M*_{*11*} du moule. Cette translation est symbolisée sur la figure 4 par la flèche *t*. La longueur de la flèche *t* est inférieure à celle de la distance *d*. Par cette translation t, on crée un volume *V*_{*2*}, défini entre la partie *M*_{*2*} du moule et l'embout 4 de la capsule qui vient d'être injectée. Par un canal d'injection *I*_{*2*}, aménagé pour l'injection d'un second matériau, ici du polyéthylène de basse densité, on injecte alors dans le volume *V*_{*2*} ce second matériau à une température déterminée *T*_{*2*}*,* par exemple 190°C. La partie cylindrique 37 du bouchon B ainsi moulé présente alors une hauteur t correspondant à la translation t du moule M₂. Ainsi, le bouchon présente une paroi latérale d'une épaisseur e (voir figure 2) présentant une valeur de e = t • sin α, α étant l'angle formé entre la directrice et la génératrice de la partie conique 22, 36 de l'embout, ou du bouchon respectivement.

De manière générale, il est avantageux de choisir les premier et second matériaux de sorte que le point de fusion du premier matériau soit égal ou supérieur au point de fusion du second matériau, par exemple supérieur de 20°C.

Après refroidissement et démoulage de l'ensemble capsule C - bouchon B, l'ensemble B+C peut être fixé, par simple vissage, sur un flacon 2 approprié, préalablement rempli d'un produit liquide P (voir figure 1). Ainsi, le distributeur 1 est prêt pour la commercialisation.

Pour l'application du produit P sur l'endroit désiré, l'utilisateur retire, de façon habituelle, le bouchon B de l'embout 4. Ce bouchon se retire sans effort excessif : dans certaines conditions, grâce au choix des conditions de moulage et grâce au choix des premier et second matériaux qui viennent d'être décrites, le bouchon ne colle pas, ou peu, sur l'embout, la présence du bourrelet 38 sur la surface conique du bouchon facilitant la préhension de ce dernier. Le cas échéant, par une légère torsion du bouchon par rapport à l'embout, l'utilisateur peut favoriser le décollage du bouchon.

Le procédé de fabrication simultané d'une capsule C et de son bouchon B, conformément à l'invention, est avantageux du point de vue économique, car il ne nécessite qu'un seul moule de fabrication en trois parties, dont juste une partie est mobile par rapport aux deux autres parties. En outre, on évite une opération supplémentaire de montage du bouchon B sur l'embout de la capsule C. Il en résulte des frais de fabrication et d'emballage nettement inférieurs aux frais correspondants d'un distributeur classique.

## Revendications

1. Capsule de distribution thermoformée (C) apte à équiper un récipient rempli d'un produit (P), comportant : un embout (4) de distribution allongé, ledit embout présentant une extrémité libre percée en son centre d'un orifice (26) pour la distribution du produit (P); un bouchon (B) pour la fermeture amovible de l'embout, l'embout (4) étant formé d'un premier matériau thermoplastique et le bouchon étant formé d'un second matériau thermoplastique, les premier et second matériaux ne pouvant former de liaison mécanique par thermofusion entre eux, le bouchon comportant une portion cylindrique (37), capsule **caractérisée en ce que** la portion cylindrique du bouchon est surmontée d'une portion sensiblement tronconique (36), ladite portion tronconique présentant une surface extérieure, ladite surface extérieure étant la réplique à l'identique de la surface extérieure d'une portion tronconique (22) formée par ladite extrémité libre de l'embout (4).

2. Capsule selon la revendication 1, **caractérisée en ce que** la portion cylindrique (37) du bouchon (B) est séparée de la portion tronconique par un épaulement (39), ledit épaulement étant d'une largeur radiale telle que, lorsque le bouchon est disposé sur l'embout, la surface extérieure de ladite portion cylindrique du bouchon soit sensiblement en alignement avec la surface extérieure de l'embout.

3. Capsule selon l'une des revendications 1 ou 2, **caractérisée en ce qu'**elle comporte, en outre, des premiers moyens de fixation (30) portés par l'embout et des seconds moyens de fixation (32) portés par le bouchon, les premiers moyens étant complémentaires des seconds.

4. Capsule selon la revendication 3, **caractérisée en ce que** les premiers moyens de fixation (30) sont constitués par un bourrelet annulaire, les seconds moyens (32) étant constitués par une gorge annulaire.

5. Capsule selon l'une des revendications 1 à 4, **caractérisée en ce que** l'orifice de distribution (26) est situé au fond d'un renfoncement (24) ménagé au centre de ladite extrémité libre, le bouchon (B) comportant un picot (34) dont la formé est telle que, en position fermée du bouchon sur l'embout (4), le picot remplisse sensiblement tout le renfoncement, obturant ainsi, de manière étanche, ledit orifice.

6. Capsule selon l'une des revendications 1 à 5, **caractérisée en ce qu'**elle comporte, en outre des moyens de raccordement (14, 16) au récipient (2).

7. Capsule selon l'une des revendications 1 à 6, **caractérisée en ce que** la température de fusion du premier matériau thermoplastique est supérieure à la température de fusion du second matériau thermoplastique.

8. Capsule selon l'une des revendications 1 à 7, **caractérisée en ce que** la différence entre la température de fusion du premier matériau thermoplastique et la température de fusion du second matériau thermoplastique est au moins égale à 20°C.

9. Capsule selon l'une des revendications 1 à 8, **caractérisée en ce que** les premier et second matériaux sont constitués par le couple : polyéthylène - polypropylène.

10. Procédé de moulage d'une capsule de distribution selon l'une quelconque des revendications précédentes, comprenant les étapes suivantes :
a) injecter un premier matériau thermoplastique ayant une température de fusion (*T*_{*1*}), dans un premier espace (*V*_{*1*}) délimité par un moule comprenant une première partie centrale (*M*_{*1*}), une seconde partie centrale (*M*_{*2*}), mobile axialement, et une partie latérale (*M*_{*11*}) entourant lesdites première et seconde parties centrales, de manière à former l'embout (4), ladite seconde partie centrale ayant une surface sensiblement tronconique, en regard de la première partie centrale ;
b) écarter axialement la seconde partie centrale par rapport à la première, de manière à délimiter un second espace (*V*_{*2*}) pour le moulage du bouchon (B);
c) injecter dans le second espace (*V*_{*2*}) un second matériau thermoplastique non compatible avec le premier matériau, de manière à former ledit bouchon (B), ledit second matériau étant injecté à une température (*T*_{*2*}*)* inférieure à la température (*T*_{*1*}) ; et
d) démouler la capsule après refroidissement.

11. Procédé selon la revendication 10, **caractérisé en ce que** le second matériau a une température de fusion (*T*_{*2*}) inférieure d'au moins 20°C à la température (*T*_{*1*})

12. Récipient contenant un produit liquide P, **caractérisé en ce qu'**il est équipé d'une capsule conforme à l'une quelconque des revendications 1 à 9.

## Patentansprüche

1. Wärmegeformte Ausgabekapsel (C), die zur Ausstattung eines mit einem flüssigen Produkt (P) gefüllten Behälters dienen kann, und die aufweist: ein längliches Ausgabe-Ansatzstück (4), wobei das Ansatzstück ein freies Ende besitzt, das in seiner Mitte eine Öffnung (26) zur Ausgabe des Produkts (P) aufweist, einen Stopfen (B) zum lösbaren Verschließen des Ansatzstücks, wobei das Ansatzstück (4) aus einem ersten thermoplastischen Material und der Stopfen aus einem zweiten thermoplastischen Material geformt wird, wobei das erste und das zweite Material zwischen sich keine mechanische Verbindung durch Wärmeschmelzen bilden können, wobei der Stopfen einen zylindrischen Abschnitt (37) aufweist, **dadurch gekennzeichnet, dass** über dem zylindrischen Bereich des Stopfens ein im wesentlichen kegelstumpfartiger Abschnitt (36) sitzt, wobei der kegelstumpfartige Abschnitt eine Außenfläche aufweist, wobei die Außenfläche die identische Wiedergabe der Außenfläche eines kegelstumpfartigen Bereichs (22) ist, der vom freien Ende des Ansatzstücks (4) gebildet wird.

2. Kapsel nach Anspruch 1, **dadurch gekennzeichnet, dass** der zylindrische Abschnitt (37) des Stopfens (B) vom kegelstumpfartigen Bereich durch eine Schulter (39) getrennt ist, wobei die Schulter eine solche radiale Breite aufweist, dass, wenn der Stopfen auf dem Absatzstück angeordnet ist, die Außenfläche des zylindrischen Abschnitts des Stopfens im wesentlichen mit der Außenfläche des Ansatzstücks fluchtet.

3. Kapsel nach einem der Ansprüche 1 oder 2, **dadurch gekennzeichnet, dass** sie außerdem erste Befestigungsmittel (30), die vom Ansatzstück getragen werden, und zweite Befestigungsmittel (32) aufweist, die vom Stopfen getragen werden, wobei die ersten Mittel zu den zweiten Mitteln komplementär sind.

4. Kapsel nach Anspruch 3, **dadurch gekennzeichnet, dass** die ersten Befestigungsmittel (30) aus einem Ringwulst bestehen, während die zweiten Mittel (32) aus einer Ringnut bestehen.

5. Kapsel nach einem der Ansprüche 1 bis 4, **dadurch gekennzeichnet, dass** die Ausgabeöffnung (26) sich am Boden eines Rücksprungs (24) befindet, der in der Mitte des freien Endes ausgebildet ist, wobei der Stopfen (B) einen Zapfen (34) besitzt, der so geformt ist, dass er in der geschlossenen Stellung des Stopfens auf dem Ansatzstück (4) den ganzen Rücksprung ausfüllt, wodurch die Öffnung dicht verschlossen wird.

6. Kapsel nach einem der Ansprüche 1 bis 5, **dadurch gekennzeichnet, dass** sie außerdem Mittel (14, 16) zur Verbindung mit dem Behälter (2) aufweist.

7. Kapsel nach einem der Ansprüche 1 bis 6, **dadurch gekennzeichnet, dass** die Schmelztemperatur des ersten thermoplastischen Materials höher ist als die Schmelztemperatur des zweiten thermoplastischen Materials.

8. Kapsel nach einem der Ansprüche 1 bis 7, **dadurch gekennzeichnet, dass** der Unterschied zwischen der Schmelztemperatur des ersten thermoplastischen Materials und der Schmelztemperatur des zweiten thermoplastischen Materials mindestens gleich 20°C ist.

9. Kapsel nach einem der Ansprüche 1 bis 8, **dadurch gekennzeichnet, dass** das erste und das zweite Material aus dem Paar Polyethylen-Polypropylen bestehen.

10. Verfahren zur Herstellung einer Ausgabekapsel nach einem der vorhergehenden Ansprüche, das die folgenden Schritte enthält:
a) Einspritzen eines ersten thermoplastischen Materials mit einer Schmelztemperatur (T₁) in einen ersten Raum (V₁), der von einer Gießform begrenzt wird, die einen ersten zentralen Bereich (M₁), einen zweiten, axial beweglichen zentralen Bereich (M₂) und einen Seitenbereich (M₁₁) aufweist, der den ersten und den zweiten zentralen Bereich umgibt, um das Ansatzstück (4) zu formen, wobei der zweite zentrale Bereich eine im wesentlichen kegelstumpfartige Oberfläche vor dem ersten zentralen Bereich aufweist;
b) axiales Entfernen des zweiten zentralen Bereichs vom ersten, zentralen Bereich, um einen zweiten Raum (V₂) zum Formen des Stopfens (B) festzulegen;
c) Einspritzen eines zweiten thermoplastischen Materials, das mit dem ersten Material nicht kompatibel ist, in den zweiten Raum (V₂), um den Stopfen (B) zu bilden, wobei das zweite Material mit einer Temperatur (T₂) eingespritzt wird, die unter der Temperatur (T₁) liegt, und
d) Entformen der Kapsel nach Abkühlung.

11. Verfahren nach Anspruch 10, **dadurch gekennzeichnet, dass** das zweite Material eine Schmelztemperatur (T₂) hat, die um mindestens 20°C unter der Temperatur (T₁) liegt.

12. Ein flüssiges Produkt P enthaltender Behälter, **dadurch gekennzeichnet, dass** er mit einer Kapsel gemäß einem der Ansprüche 1 bis 9 ausgestattet ist.

## Claims

1. Thermoformed dispensing cap (C) that can be fitted to a container full of a product (P), comprising: an elongate dispensing nozzle (4), the said nozzle having a free end pierced at its centre with an orifice (26) for dispensing the product (P); a stopper (B) for removably closing the nozzle, the nozzle (4) being formed of a first thermoplastic material, and the stopper being formed of a second thermoplastic material, the first and second materials being incapable of forming a mechanical bond with each other through hot-melting, the stopper having a cylindrical portion (37) (cap) **characterized in that** the cylindrical portion of the stopper is surmounted by an approximately frustoconical portion (36), the said frustoconical portion having an outer surface, the said outer surface being an identical replica of the outer surface of a frustoconical portion (22) formed by the said free end of the nozzle (4).

2. Cap according to Claim 1, **characterized in that** the cylindrical portion (37) of the stopper (B) is separated from the frustoconical portion by a shoulder (39), the said shoulder having a radial width such that when the stopper is placed over the nozzle, the outer surface of the said cylindrical portion of the stopper comes approximately in line with the outer surface of the nozzle.

3. Cap according to either of Claims 1 and 2, **characterized in that** it further comprises first attaching means (30) borne by the nozzle and second attaching means (32) borne by the stopper, the first means complementing the second.

4. Cap according to Claim 3, **characterized in that** the first attaching means (30) consist of an annular rib, the second means (32) consisting of an annular groove.

5. Cap according to one of Claims 1 to 4, **characterized in that** the dispensing orifice (26) lies at the bottom of a depression (24) formed at the centre of the said free end, the stopper (B) having a pip (34) whose shape is such that when the cap is closed over the nozzle (4), the pip fills approximately the entire depression, thus sealing the said orifice.

6. Cap according to one of Claims 1 to 5, **characterized in that** it further comprises means (14, 16) for connecting it to the container (2).

7. Cap according to one of Claims 1 to 6, **characterized in that** the melting point of the first thermoplastic material is higher than the melting point of the second thermoplastic material.

8. Cap according to one of Claims 1 to 7, **characterized in that** the difference between the melting point of the first thermoplastic material and the melting point of the second thermoplastic material is at least equal to 20°C.

9. Cap according to one of Claims 1 to 8, **characterized in that** the first and second materials consist of the pairing: polyethylene - polypropylene.

10. Method for moulding a dispensing cap according to any one of the preceding claims, comprising the following steps:
a) injecting a first thermoplastic material which has a melting point (*T*_{*1*}) into a first space (*V*_{*1*}) delimited by a mould comprising a first central part (*M*_{*1*}), a second central part (*M*_{*2*}) which can be moved axially, and a lateral part (*M*_{*11*}) surrounding the said first and second central parts, so as to form the nozzle (4), the said second central part having an approximately frustoconical surface facing the first central part;
b) axially moving the second central part away from the first, so as to delimit a second space (*V*_{*2*}) for moulding the stopper (B) ;
c) injecting into the second space (*V*_{*2*}) a second thermoplastic material which is not compatible with the first material, so as to form the said stopper (B), the said second material being injected at a temperature (*T*_{*2*}) which is below the temperature (*T*_{*1*}) ; and
d) demoulding the cap after cooling.

11. Method according to Claim 10, **characterized in that** the second material has a melting point (*T*_{*2*}) at least 20°C below the temperature (*T*_{*1*}).

12. Container containing a liquid product P, **characterized in that** it is fitted with a cap in accordance with any one of Claims 1 to 9.
